# EUROPEAN PATENT APPLICATION

(11) **EP 1 220 552 A1**
(43) Date of publication of application: **03.07.2002**
(21) Application number: 01128544.2
(22) Date of filing: 29.11.2001
(51) Int. Cl.: H04Q 7/22, G06F 17/60

(54) **System and method for targeted advertising**

(30) Priority: 29.12.2000 US 751801
(71) Applicant: Gateway, Inc., North Sioux City, South Dakota 57049 (US)
(72) Inventor: Leapman, Scott D., Sioux City, IA 51104 (US); Gray, Paige L., Dakota Dunes, SD 57049 (US); Hess, Melissa, Sioux City, IA 51106 (US)
(74) Representative: Viering, Jentschura & Partner

(57) **Abstract**

A method and a system for broadcast advertising to a mobile communication device are disclosed. The mobile communication device receives a broadcast advertisement from an advertisement broadcasting system or source, preferably through a wireless communication channel, and selects that advertisement based on stored user profile or acceptance data, thereby providing broadcast advertising that is filtered by the communication device. If the communication device selects the advertisement, the advertisement may be displayed or stored.

## Description

### BACKGROUND OF THE INVENTION

### 1. Field of the Invention

The present invention relates generally to broadcast advertising, and more particularly, to broadcast advertisements transmitted to a communication device and selected based on acceptance data stored on the communication device.

### 2. Related Art

Increasingly, advertising has been used to reach users of computer devices. For example, users of mobile communication devices have been targeted for receiving ads. As a result, these devices may be bombarded with blanket advertising. Mobile communication devices generally have limited data storage capacity that may be burdened by large numbers of ads. Further, mobile communication devices typically have limited output capability, making it difficult for a user to view and select ads of interest from a large number of received ads.

Advertising is more effective when targeted to certain individuals, *e.g.*, those known to have an interest in the advertised goods or services. Advertisers prefer to tailor advertising to a particular individual or group, such as direct mailings to people in a certain demographic or geographic area, or wireless transmissions to individuals fitting certain profiles known to the advertiser. The demographic or other data used for such advertising may be costly if purchased from an outside supplier. This approach also raises privacy issues with individuals who may wish to remain anonymous or to limit distribution of their identity.

A need therefore exists for a method of receiving advertisements in a less intrusive and more convenient way, while retaining the privacy of the individuals most likely to find the advertisements useful.

### SUMMARY OF THE INVENTION

The present invention solves the above problems by providing an improved system and method for broadcast advertising to a mobile communication device.

In one aspect of the present invention, a mobile communication device receives a broadcast advertisement and selects that advertisement based on stored user profile or acceptance data, thereby providing broadcast advertising that is filtered by the communication device. If the communication device selects the advertisement, the advertisement may be displayed or stored.

In another aspect of the present invention, a system for broadcast advertising includes a mobile communication device, which is capable of storing acceptance data, and an advertisement broadcasting system or source, which is capable of transmitting broadcast advertisements to the mobile communication device. The mobile communication device is further capable of receiving the broadcast advertisements from the advertisement broadcasting source and selecting at least one of the advertisements based on the stored acceptance data.

Further features and advantages of the invention as well as the structure and operation of various embodiments of the invention are described in detail below with reference to the accompanying drawings.

### BRIEF DESCRIPTION OF THE DRAWINGS

FIG. 1 is a schematic diagram showing a system including a mobile communication device and advertisement broadcasting sources in accordance with a preferred embodiment of the present invention.
FIG. 2 is a schematic diagram showing one embodiment of a mobile communication device.
FIG. 3 is a schematic diagram illustrating one embodiment wherein a mobile communication device is used in a tradeshow hall.
FIG. 4 is a flowchart showing a method for broadcast advertising to a mobile communication device in accordance with a preferred embodiment of the present invention.
FIG. 5 is a flowchart illustrating one embodiment of a method for generating acceptance data to be stored on a mobile communication device and used in selecting broadcast advertisements.

### DETAILED DESCRIPTION OF THE INVENTION

Generally, advertisements are available in a number of convenient formats, *e.g.*, full-screen, banner, or screen-saver. A broadcast advertisement is a particular form of advertisement which is sent over a communication medium and is accessible to two or more communications devices simultaneously. Embodiments of the present invention are directed to a method and a system for broadcast advertising to a mobile communication device in which the communication device selects certain advertisements from a variety of broadcast advertisements in accordance with user profile or acceptance data stored on the communication device.

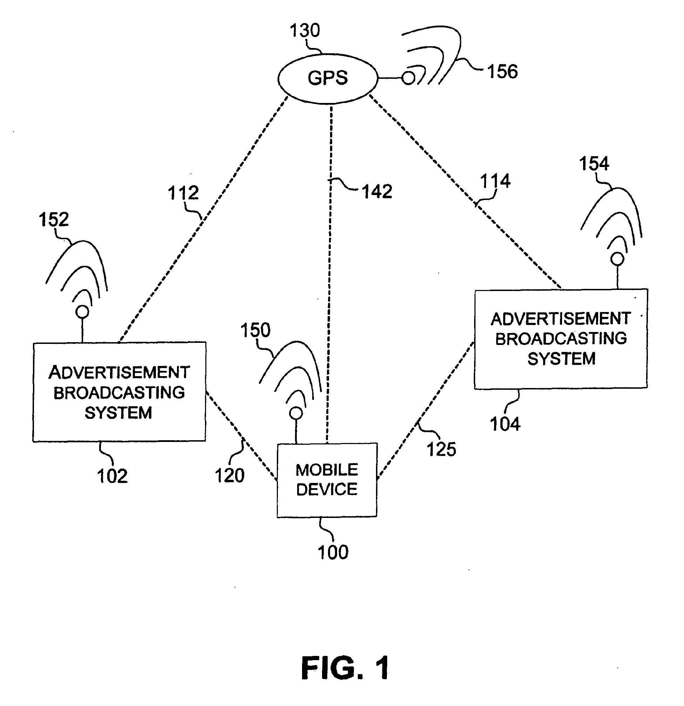

FIG. 1 illustrates a system for broadcast advertising in accordance with a preferred embodiment of the present invention. The system includes a mobile communication device 100 and advertisement broadcasting systems or sources ("ad sources") 102 and 104. Each ad source 102 or 104 is a source or transmitter of broadcast advertisements. The ad source 102 or 104 may be a billboard, a storefront (*e.g.*, a store having frontage on a street, mall, or thoroughfare), or any other wireless transmitter.

The mobile communication device 100 is any computing device that is mobile and capable of receiving broadcast advertisements. The mobile device 100 may be a handheld computer *(e.g.,* PalmPilot), a personal digital assistant ("PDA"), a cellular telephone, a 2-way pager, an in-car computer, or the like. Such a mobile device 100 is generally accessible anywhere, *e.g*., in a pocket, bag, or vehicle.

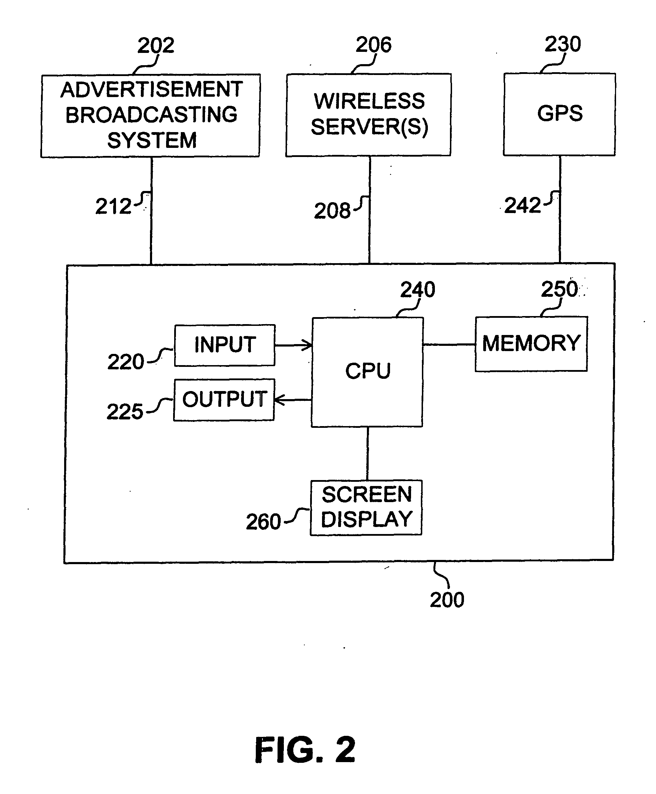

FIG. 2 shows one embodiment of a mobile communication device 200. The communication device 200 includes a CPU 240, memory 250, an input signal 220, an output signal 225, and a display 260. The output signal 255 may be any audio, vibration, digital, or other signal that is detectable by a user or any other suitable signal target. The communication device 200 also includes any suitable operating system and user interface installed thereon (not shown), including but not limited to, Windows *(e.g.,* 95/98, NT, CE), Linux, and/or Palm OS.

The communication device 200 is able to communicate with an advertisement broadcasting system or source 202 through a communication channel 212. The communication device 200 may or may not be within a broadcast range of the communication channel 212, depending on the position of the communication device 200. The communication device 200 is also able to communicate with GPS 230 via a communication channel 242. Further, the communication device 200 is able to communicate with other wireless servers 206 via a communication channel 208. The wireless servers 206 may be Web servers, mobile phone service servers, or other broadcast advertisement sources.

Referring back to FIG. 1, the mobile device 100 has a wireless transmission module 150, which is capable of wirelessly sending and receiving data. The ad sources 102 and 104 also have wireless transmission modules 152 and 154, respectively, which are capable of wirelessly sending and receiving data. The ad source 102 transmits broadcast advertisements to the mobile device 100 via a wireless channel 120, and the ad sources 104 transmits broadcast advertisements to the mobile device 100 via a wireless channel 125. Once the mobile device 100 is within a broadcast range of the ad source 102 or 104, the mobile device 100 is able to receive broadcast advertisements from the ad source 102 or 104. For example, the mobile device 100 may be configured to receive broadcast advertisements that are transmitted from a limited distance or that are above a threshold signal strength.

In the illustrated embodiment, the system for broadcast advertising further includes a Global Positioning System ("GPS") 130. The GPS includes a wireless transmission module 156, which is capable of emitting signals via a wireless channel 142. In one embodiment, the mobile device 100 is configured to obtain its position from the GPS 130 via the wireless channel 142. The mobile device 100 is then able to obtain driving directions for reaching the ad sources 102 and 104, if desired. In alternative embodiments, the mobile device 100 may send an indicator signal to the ad source 102 or 104. Such an indicator signal may send information about the position of the mobile device 100 directly to the ad source 102 or 104 via the wireless channel 120 or 125. The ad source 102 or 104 may then use the information received about the position of the mobile device 100 to toggle on and off transmission of broadcast advertisements to the mobile device 100. When the ad source 102 or 104 detects that the mobile device 100 is within its broadcast range, the ad source 102 or 104 proceeds to transmit broadcast advertisements to the mobile device 100. In further alternative embodiments, wireless positioning systems other than GPS, which are able to identify the location of the mobile device 100 relative to the ad source 102 or 104, may be utilized.

In preferred embodiments, the ad source 102 or 104 transmits, and the mobile device 100 receives, broadcast advertisements through a wireless communication channel. The advertisements may be broadcast through embedded signals in radio or television transmissions, Bluetooth or infrared signals, other radio frequency ("RF") signals, or any other wireless means. The advertisements may also be broadcast via any appropriate protocol, including but not limited to, infrared protocols (such as the Infrared Data Association ("IrDA") specification and the Advanced Infrared ("Air") specification), the IEEE standard 802.11, the European Telecommunications Standards Institute ("ET-SI") standard HIPERLAN, and the HomeRF Shared Wireless Access Protocol ("SWAP"). Further, the advertisements may be transmitted via distributed systems, including but not limited to, local area networks ("LANs"), wide area networks ("WANs"), the World Wide Web ("Web"), and personal LANs (such as MIT's personal area network ("PAN") and GTE Corporation's Body LAN based on short-range RF signals).

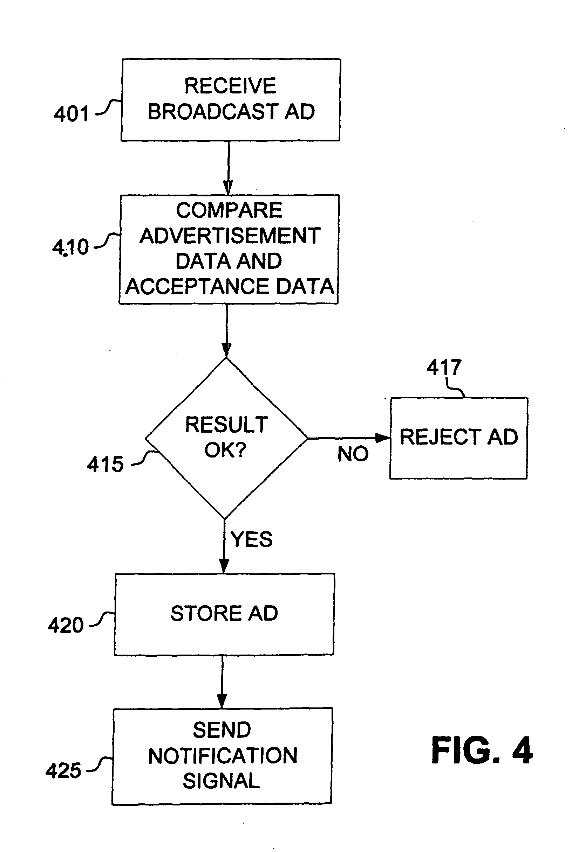

FIG. 4 is a flowchart showing a method for broadcast advertising to a mobile communication device in accordance with a preferred embodiment of the present invention. In preferred embodiments, the mobile device 100 receives broadcast advertisements from the ad source 102 or 104 and selects certain advertisements in accordance with user profile or acceptance data stored on the mobile device 100.

Upon receiving a broadcast advertisement in step 401, the mobile device 100 proceeds to compare advertisement data with stored acceptance data in step 410. The advertisement data is data contained in and extractable from the broadcast advertisements. The advertisement data is derived from the ad source 102 or 104, and may include but is not limited to, the name of a company or brand, information about products and/or services, price information, deadlines for special offers, or any other information that may be useful for filtering through or selecting certain broadcast advertisements.

The user profile or acceptance data is stored on the mobile device 100 and is derived from a user of the mobile device 100. The acceptance data serves as criteria for accepting or selecting broadcast advertisements received from the ad source 102 or 104. The acceptance data may include, but is not limited to, company and/or brand names, information about products and/or services, price information and/or price thresholds, or any other information that may be useful for filtering through or selecting certain broadcast advertisements. To filter through or select particular broadcast advertisements, the user configures the mobile device 100 with acceptance data to accept specified types of broadcast advertisements, for example, from specific companies or with specific attributes such as a minimum percentage off or a specific brand of item, and/or to reject other types of broadcast advertisements.

Once the communication device 100 compares the advertisement data with the acceptance data to obtain a comparison result in step 410, the comparison result is checked at step 415. The comparison result is determined to be satisfactory only if there is an exact match between the advertisement data and the acceptance data, or alternatively, may be based on a less strict standard. Any known methods used by search engines for matching search criteria with comparison data in search targets may be readily utilized to determine whether the comparison result is satisfactory.

If the comparison result is not satisfactory, the mobile device 100 rejects the broadcast advertisement in step 417. However, if the comparison result is satisfactory, then the mobile device 100 stores the broadcast advertisement on the mobile device 100 in step 420. In alternative embodiments, the mobile device 100 may simply display the broadcast advertisement to the user of the mobile device 100 without storing the advertisement. At step 425, a notification signal is then sent to the user of the mobile device 100. With respect to rejected broadcast advertisements, the mobile device 100 may immediately delete them, mark them for future deletion, or store them being marked as rejected.

In one embodiment, after storing the accepted broadcast advertisements, the user may subsequently browse through the stored advertisements in the mobile device 100 as desired, e.g., when the user is ready to go shopping. The stored advertisements may be viewed by any method available within the operating system of the mobile device 100. Further, the mobile device 100 may subsequently purge the stored advertisements, for example, on a weekly basis or based on an expiration date embedded in the advertisement.

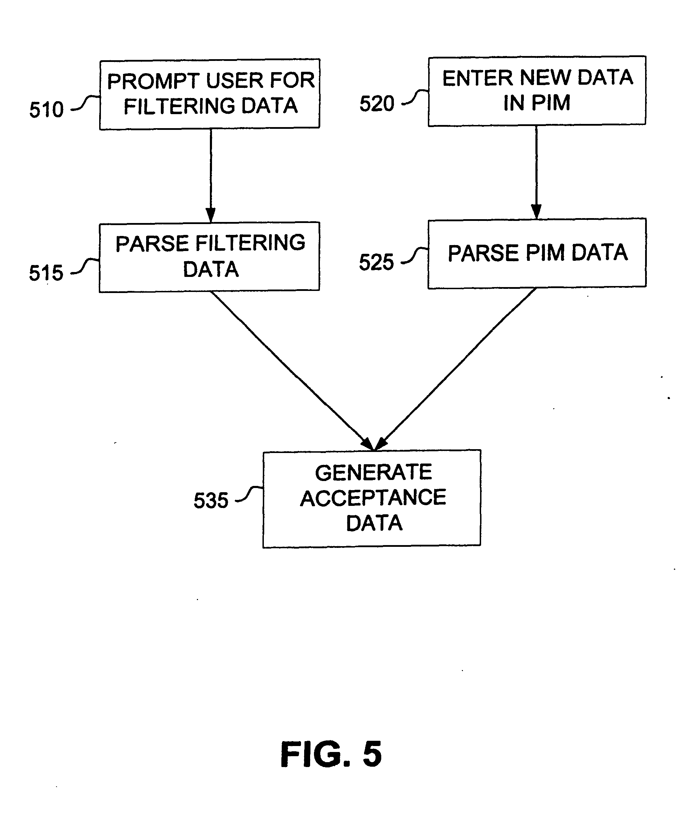

In preferred embodiments, the communication device may be set up and modified in any convenient way to store suitable acceptance data. FIG. 5 is a flowchart illustrating one embodiment of a method for generating acceptance data used in filtering through or selecting broadcast advertisements. The user is prompted in step 510 to directly enter data to be used for constructing acceptance data. The user may manually enter the data, select the data from a predetermined list, select the data from templates, or the like. The data may be keywords or natural language text. The entered data is parsed in step 515, and the acceptance data is created in step 535.

Alternatively, the acceptance data in the mobile device 100 may be modified based on entries in the user's personal information manager ("PIM"). Examples of PIMs include any software capable of organizing personal information, including but not limited to, Microsoft Outlook, Lotus Organizer, Starfish Sidekick, or Franklin Planner. The acceptance data in the mobile device 100 may be modified based on entries in the user's PIM, such as calendar entries, task or to-do lists, reminders, and notes. For example, the text from a PIM entry may be extracted and used to create acceptance data.

In step 520, new data is entered in the PIM. Next, the new PIM data is parsed in step 525. Finally, the parsed PIM data is used to create acceptance data in step 535. For example, a user's PIM may have an upcoming entry for "Dad's Birthday" in the calendar. This entry creates acceptance data in the mobile device 100, and then the mobile device 100 accepts broadcast advertisements for items that would be appropriate for such an event. Or, the user's PIM may have an item "buy skim milk" in the task or to-do list. A grocery store may be broadcasting a list of items on sale, one of which is skim milk. As the user drives past this store, the mobile device 100 accepts the broadcast advertisement and notifies the user that the particular store has skim milk on sale. A person of skill in the art could readily develop the software needed to create and modify such functionality.

The parsing steps 515 and 525 may be fixed or customizable by the user. Any appropriate process may be used to create acceptance data from manually entered text or PIM entries, such as processes used by search engines to parse text entered as a query by a user. Additionally, the acceptance data obtained in step 535 may be modified by the user, *e.g*., using a suitable editor.

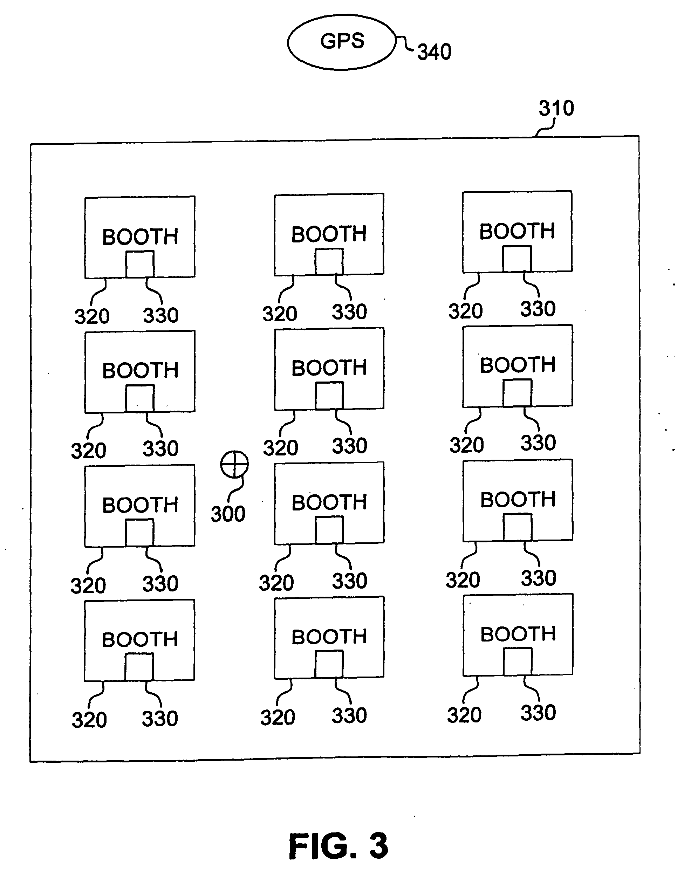

FIG. 3 shows one embodiment of the invention in which a mobile device 300 is used in a tradeshow hall 310. The tradeshow hall 310 includes a plurality of booths 320 at different locations. Each booth 320 is equipped with a wireless transmitter 330 that emits broadcast advertisements describing products or services (or any other desired information) and the location of the booth 320. A user carrying the mobile device 300 walks through the tradeshow hall 310 among the booths 320. The mobile device 300 may be configured to contain acceptance data for filtering broadcast advertisements transmitted from the various booths 320. The mobile device 300 may also be configured to only receive broadcast advertisements from booths 320 in the immediate vicinity of the mobile device 300 and/or according to the signal strength of the broadcast advertisement. When a broadcast advertisement is accepted from a booth 320 based on the acceptance data stored in the mobile device 300, the user is notified and may then proceed to the corresponding booth 320. The mobile device 300 may also communicate with GPS 340 to navigate within the hall 310 or to provide information to the booths 320.

While particular embodiments of the present invention have been described above, many modifications may be made without departing from the scope and spirit of the invention. The above detailed description is, therefore, not to be taken in a limiting sense, and the scope of the present invention is defined only by the appended claims and equivalents thereof.

## Claims

1. A method for broadcast advertising to a mobile communication device, comprising the steps of:
storing acceptance data in the communication device;
receiving by the communication device a broadcast advertisement containing advertisement data; and
comparing the advertisement data to the acceptance data to obtain a comparison result.

2. The method of claim 1, wherein the broadcast advertisement is received by the communication device through a wireless communication channel.

3. The method of claim 2, wherein the broadcast advertisement is received by the communication device through one of: a radio transmission, a television transmission, a Bluetooth signal, and an infrared signal.

4. The method of claim 1, wherein the broadcast advertisement is received by the communication device from one of: a billboard and a storefront.

5. The method of claim 1, wherein the acceptance data comprises preferences for accepting broadcast advertisements specified by a user of the communication device.

6. The method of claim 1, further comprising the step of modifying the acceptance data by integrating entries from a personal information manager.

7. The method of claim 1, further comprising the step of displaying the broadcast advertisement on the communication device based on the comparison result.

8. The method of claim 1, further comprising the step of storing the broadcast advertisement on the communication device based on the comparison result.

9. The method of claim 8, further comprising the steps of:
reading deletion data in a stored advertisement, wherein the deletion data indicates criteria for deleting the stored advertisement; and
deleting the stored advertisement from the communication device based on the deletion data.

10. The method of claim 1, further comprising the step of outputting a notification signal to a user of the communication device.

11. The method of claim 1, further comprising the step of sending an indicator signal to a source of the broadcast advertisement, wherein the indicator signal notifies the source that the communication device is within a broadcast range of the broadcast advertisement.

12. The method of claim 1, further comprising the step of communicating through the communication device with a wireless positioning system.

13. The method of claim 12, wherein the wireless positioning system is GPS.

14. A method for broadcast advertising to a mobile communication device, comprising the steps of:
receiving by the communication device one or more broadcast advertisements; and
selecting at least one of the received advertisements based on preferences for selecting advertisements specified by a user of the communication device.

15. The method of claim 14, wherein the broadcast advertisements are received from a transmitter when the communication device is within a broadcast range of the transmitter.

16. The method of claim 14, wherein the broadcast advertisements are received from a local transmitter by the communication device through a wireless communication channel.

17. The method of claim 14, further comprising the step of modifying the preferences for selecting advertisements specified by the user of the communication device by integrating entries from a personal information manager.

18. The method of claim 14, further comprising the step of displaying the selected broadcast advertisements to the user of the communication device.

19. A mobile communication device, comprising:
memory;
logic for storing acceptance data on the memory;
logic for receiving a broadcast advertisement containing advertisement data; and
logic for comparing the advertisement data to the acceptance data to obtain a comparison result.

20. The mobile communication device of claim 19, wherein the logic for receiving the broadcast advertisement is capable of receiving the broadcast advertisement through a wireless communication channel.

21. The mobile communication device of claim 20, wherein the logic for receiving the broadcast advertisement is capable of receiving the broadcast advertisement through one of: a radio transmission, a television transmission, a Bluetooth signal, and an infrared signal.

22. The mobile communication device of claim 19, wherein the acceptance data comprises preferences for accepting broadcast advertisements specified by a user of the communication device.

23. The mobile communication device of claim 19, further comprising logic for modifying the acceptance data by integrating entries from a personal information manager.

24. The mobile communication device of claim 19, further comprising:
a display; and
logic for displaying the broadcast advertisement on the display based on the comparison result.

25. The mobile communication device of claim 19, further comprising logic for storing the broadcast advertisement on the memory based on the comparison result.

26. The mobile communication device of claim 19, further comprising logic for communicating with a wireless positioning system.

27. The mobile communication device of claim 26, wherein the wireless positioning system is GPS.

28. A system for broadcast advertising to a mobile communication device, comprising:
logic for receiving acceptance data from the communication device;
logic for selecting one or more advertisements based on the received acceptance data; and
logic for broadcasting the selected advertisements to the communication device.

29. The system of claim 28, further comprising logic for detecting whether the communication device is within a broadcast range, and further wherein the logic for broadcasting the selected advertisements is capable of broadcasting the selected advertisements to the communication device upon detecting that the communication device is within the broadcast range.

30. The system of claim 28, wherein the logic for broadcasting the selected advertisements is capable of broadcasting the selected advertisements to the communication device through a wireless communication channel.

31. The system of claim 28, wherein the acceptance data comprises preferences for accepting broadcast advertisements specified by a user of the communication device.

32. The system of claim 28, further comprising logic for communicating with a wireless communication channel.

33. A system for broadcast advertising, comprising:
a mobile communication device capable of storing acceptance data thereon; and
an advertisement broadcasting system capable of transmitting one or more broadcast advertisements to the mobile communication device;
wherein the mobile communication device is capable of receiving the broadcast advertisements from the advertisement broadcasting system and selecting at least one of the broadcast advertisements based on the acceptance data.

34. The system of claim 33, wherein the advertisement broadcasting system is capable of detecting whether the mobile communication device is within a broadcast range, and further wherein the advertisement broadcasting system is capable of transmitting the broadcast advertisements to the mobile communication device upon detecting that the mobile communication device is within the broadcast range.

35. The system of claim 33, wherein the advertisement broadcasting system is capable of transmitting, and the mobile communication device is capable of receiving, the broadcast advertisements through a wireless communication channel.

36. The system of claim 33, wherein the acceptance data comprises preferences for accepting broadcast advertisements specified by a user of the mobile communication device.

37. The system of claim 33, wherein the mobile communication device and the advertisement broadcasting system are capable of communicating with a wireless positioning system.
